(19)

Europäisches Patentamt
European Patent Office
Office européen des brevets

(11) Publication number: **0 425 151 B1**

(12) **EUROPEAN PATENT SPECIFICATION**

(45) Date of publication of patent specification: **06.09.95** (51) Int. Cl.[6]: **C08L 95/00**

(21) Application number: **90311247.2**

(22) Date of filing: **15.10.90**

(54) **Asphalt composition.**

(30) Priority: **16.10.89 JP 268602/89**
**27.04.90 JP 112132/90**

(43) Date of publication of application:
**02.05.91 Bulletin 91/18**

(45) Publication of the grant of the patent:
**06.09.95 Bulletin 95/36**

(84) Designated Contracting States:
**DE FR GB**

(56) References cited:
**DE-A- 2 454 803**
**US-A- 2 812 339**
**US-A- 3 287 296**
**US-A- 3 832 314**
**US-A- 3 956 001**

(73) Proprietor: **Hitachi Chemical Co., Ltd.**
**1-1, Nishishinjuku 2-chome**
**Shinjuku-ku,**
**Tokyo 160 (JP)**

Proprietor: **Kobayashi, Shiro**
**8-21 Yagiyamaminami-1-chome**
**Taihaku-ku,**
**Sendai-shi (JP)**

(72) Inventor: **Kobayashi, Shiro**
**8-21 Yagiyamaminami 1-chome**
**Taihaku-ku,**
**Sendai-shi (JP)**
Inventor: **Kojima, Takeo**
**1-4, Edakita-2-chome**
**Midori-ku,**
**Yokohama-shi (JP)**

(74) Representative: **Cresswell, Thomas Anthony et al**
**J.A. Kemp & Co.**
**14 South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to an asphalt composition suitable for paving roads.

As asphalt compositions for paving roads, there is used a composition obtained by mixing asphalt with styrene-butadiene rubber (SBR). But the asphalt composition containing SBR has a brittle temperature of about 2°C, so that it has a defect in that it cannot be used in cold districts due to cracks.

US-3832 314 discloses a thermoplastic adhesive and coating composition which comprises (A) 1 to 99% by weight of a thermoplastic segmented copolyester elastomer and (B) 1 to 99% by weight of one or more low molecular weight thermoplastic resins.

DE-A-2454803 discloses a composition comprising a mineral component such as sand, a polymeric component such as a polyester and a hydrocarbon-containing component such as tar pitch. The composition is suitable for use in road surfacing.

US-3287 296 discloses a bituminous composition consisting of a bituminous material and a polyester prepared from a bituminous-compatible polyol and a pyromellitic dianhydride.

It is an object of the present invention to provide an asphalt composition suitable for paving roads, said asphalt composition being usable at low temperatures of -8° to -10°C due to having a low brittle temperature and hardly retaining prints of wheels of travelling cars on road surfaces even at high temperatures.

The present invention provides an asphalt composition comprising from 1 to 20 parts by weight per 100 parts by weight of asphalt of at least one polyether or at least one polyester or a mixture thereof wherein the polyester is selected from poly-$\epsilon$-caprolactones, triol form polyesters, poly-$\beta$-propiolactones, polyglycolids, poly(lactic acid)s, $H-[O(CH_2)_5CO]_m-OCH_2CH_2O-[CO(CH_2)_5O]_n-H$ in which n and m are independently integers of from 2 to 1000 or a mixture of such polyesters, and wherein the polyether is selected from (i) ethylene oxide polymers, propylene oxide polymers, adducts of these polymers with amine compounds or (ii) ethylene oxide-propylene oxide copolymers.

Figs. 1 and 3 are graphs showing the results of wheel tracking test carried out in working examples.

Figs. 2 and 4 are graphs showing the results of flexural strength tests carried out in working examples.

DESCRIPTION OF THE PREFERRED EMBODIMENTS

The asphalt composition of the present invention comprises asphalt, a polyether polymer and/or a polyester polymer, and if necessary conventional additives such as aggregate or filler(s).

The asphalt used in the present invention is not particularly limited. As the asphalt, there can be used natural asphalt, petroleum asphalt such as straight asphalt or blown asphalt alone or as a mixture thereof. The asphalt may contain a bituminous material such as tar or pitch.

More concretely, the polyether polymers have repeating units of the formula:

$$-\!\!\left(\mathrm{OCH - CH_2}\right)_n- ,$$

$$-\!\!\left(\mathrm{O\underset{\displaystyle CH_3}{CH} - CH_2}\right)_n- , \text{ or}$$

$$-\!\!\left(\mathrm{OCH_2CH_2}\right)_m\!\!-\!\!\left(\mathrm{O\underset{\displaystyle CH_3}{CH}CH_2}\right)_n-$$

wherein m and n are independently integers of 1 or more, preferably 2 to 1000, more preferably 5 to 200.

As the polyether polymer, the following polymers are commercially available.

PLURONIC® L122, mfd. by Asahi Denka Kogyo K.K., represented by the formula:

$HO(C_2H_4O)_a - (C_3H_6O)_b - (C_2H_4O)_c H$ (1)

wherein the contents of the units "a" and "c" are 20% by weight, molecular weight 4900.

PLURONIC F127, mfd. by Asahi Denka Kogyo K.K., the contents of the units "a" and "c" in the formula (1) being 70% by weight, molecular weight 11,500.

Polypropylene oxide P-3000, mfd. by Asahi Denka Kogyo K.K., molecular weight 3000.

Polypropylene oxide G-4000, mfd. by Asahi Denka Kogyo K.K., molecular weight 4000.

Tetronic 704, mfd. by Asahi Denka Kogyo K.K., and represented by the formula:

$$\begin{matrix} H(O_4H_2C)_y-(O_6H_3C)_x \\ H(O_4H_2C)_y-(O_6H_3C)_x \end{matrix} \Big\rangle NCH_2CH_2N \Big\langle \begin{matrix} (C_3H_6O)_x-(C_2H_4O)_yH \\ (C_3H_6O)_x-(C_2H_4O)_yH \end{matrix}$$

wherein the content of unit "y" is 40% by weight, molecular weight 5000.

The polyester polymer is a polymer having ester functional groups in the main chain. Examples of the polyester polymer are as follows.

$$CH_3O\left[C(=O)(CH_2)_5O\right]_n H$$

(poly-ε-caprolactone)

$$H\left[O(CH_2)_5C(=O)\right]_m OCH_2CH_2O\left[C(=O)(CH_2)_5O\right]_n H$$

(diol form)

$$\begin{array}{l} CH_2O\left[C(=O)(CH_2)_5O\right]_{\ell} H \\ | \\ CHO\left[C(=O)(CH_2)_5O\right]_m H \\ | \\ CH_2O\left[C(=O)(CH_2)_5O\right]_n H \end{array}$$

(triol form)

$$R\left(CH_2CH_2C(=O)O\right)_n H$$

(poly-β-propiolactone)

$$R\left(CH_2C(=O)O\right)_n H$$

(polyglycolid)

$$R\left(CH(CH_3)C(=O)O\right)_n H$$

(Poly(lactic acid))

In the above-mentioned formulae, ℓ, m and n are independently positive integers of preferably 2 or more, e.g. 1000, and more preferably 5 to 200; R is an alkyl group, an alkoxy group, a hydroxyl group, an aralkyl group, an amino group, an allyl group, an aryl group, an alkoxyalkyl group, an allyloxyalkyl group, a carboxyalkyl group, or an alkoxycarbonylalkyl group.

As the polyester, the following polymers are commercially available.

PLACCEL® H-1P, mfd. by Daicel Chemical Industries, Ltd., poly-ϵ-caprolactone, molecular weight 10,000, melting point 60 ° C, Tg -60 ° C.

PLACCEL 220, mfd. by Daicel Chemical Industries, Ltd., poly-ϵ-caprolactone, diol form or type, molecular weight 2,000, melting point 53 ° -55 ° C.

PLACCEL 320, mfd. by Daicel Chemical Industries, Ltd., poly-ϵ-caprolactone, triol form or type, molecular weight 2,000, melting point 40 ° -45 ° C.

PLACCEL 260, mfd. by Daicel Chemical Industries, Ltd., poly-ϵ-caprolactone, diol form or type, molecular weight 6,000.

The polyethers and the polyesters can be used alone or as a mixture thereof.

The polyether or the polyester is used in an amount of 1 to 20 parts by weight per 100 parts by weight of the asphalt.

As the aggregate, there can be used crushed stone having a particle size of 1.2 to 13 mm or, sand having a particle size of 0.6 to 2.5 mm, alone or as a mixture thereof, in an amount of preferably 100 to 10,000 parts by weight, more preferably 500 to 5000 parts by weight, per 100 parts by weight of the asphalt composition.

As the filler, there can be used calcium carbonate, talc, clay, zinc oxide, glass beads, alone or as a mixture thereof, in an amount of 10 to 1000 parts by weight, more preferably 50 to 500 parts by weight, per 100 parts by weight of the asphalt composition.

These materials are melted and mixed by a conventional method to provide an asphalt composition, which is used for paving roads.

The asphalt composition of the present invention has good flexibility since it contains a polyether which is excellent in compatibility with asphalt and has a low glass transition point and/or a polyester which is excellent in compatibility with asphalt, rich in flexibility and good in impact resistance.

The present invention is illustrated by way of the following Examples, in which all parts and percents are by weight, unless otherwise specified.

Example 1

| | Parts |
|---|---|
| Straight asphalt (penetration 80 ° ) | 100 |
| PLURONIC L122 | 10 |
| Crushed stone (2.5 - 13 mm) | 840 |
| Sand (less than 2.5 mm) | 1310 |
| Calcium carbonate | 150 |

The crushed stone, sand and calcium carbonate in amounts mentioned above were placed in a mixer for asphalt and mixed at 156 ° C, Then, the straight asphalt in an amount mentioned above was added to the mixer and mixed for 3 minutes. Then, the PLURONIC L122 in an amount mentioned above was added to the mixer and mixed for additional 3 minutes. The resulting mixture was placed in a mold at that temperature and solidified by compression under a load of 540 kg using a rollar compactor and traveling the rollar 24 times to give a sample.

The sample was subjected the following test.

1) Wheel Tracking Test

From the above-mentioned sample, a test piece of 5 cm x 30 cm x 30 cm was taken out using a diamond cutter to carry out a wheel tracking test.

On the test piece, a wheel of 203.2 mm in outer diameter, 5.08 mm in width and 55.1 kg in weight obtained by mounting a solid rubber (rubber hardness: JIS hardness 78) tire in 15 mm thick on an iron ring at 45 ° C, was traveled 21 reciprocations/min to measure a sinking amount of the wheel and to test the state of a wheel track.

The deformation rate (RD value) and the dynamic stability (DS value) were obtained by the following equations and listed in Table 1.

$$\text{RD value} = \frac{D_{45} - D_{30}}{45 - 30} \text{ (mm/min)}$$

$$\text{DS value} = \frac{1}{\text{RD value}} \times 42 \text{ (times/mm)}$$

wherein $D_{45}$ is a sinking amount after 45 minutes from the beginning of the test; and $D_{30}$ is a sinking amount after 30 minutes from the beginning of the test.

The sinking amount was measured and automatically recorded using a differential transformer type displacement measuring apparatus attached to the wheel via a fixed arm.

The test was carried out as to test pieces obtained by kneading or test pieces obtained by not kneading.

The term "kneading" means that the wheel is traveled on the whole surface of the test piece at 45 °C for 2 hours to give sufficient kneading.

Examples 2 to 5, Comparative Example 1

Test pieces were obtained in the same manner as described in Example 1 except for using 10 parts of TETRONIC 704, PLURONIC F127, P-3000 or G-4000 in place of 10 parts of PLURONIC L122. The test was carried out in the same manner as described in Example 1. For comparison, a test piece containing no PLURONIC L122 was also obtained and tested.

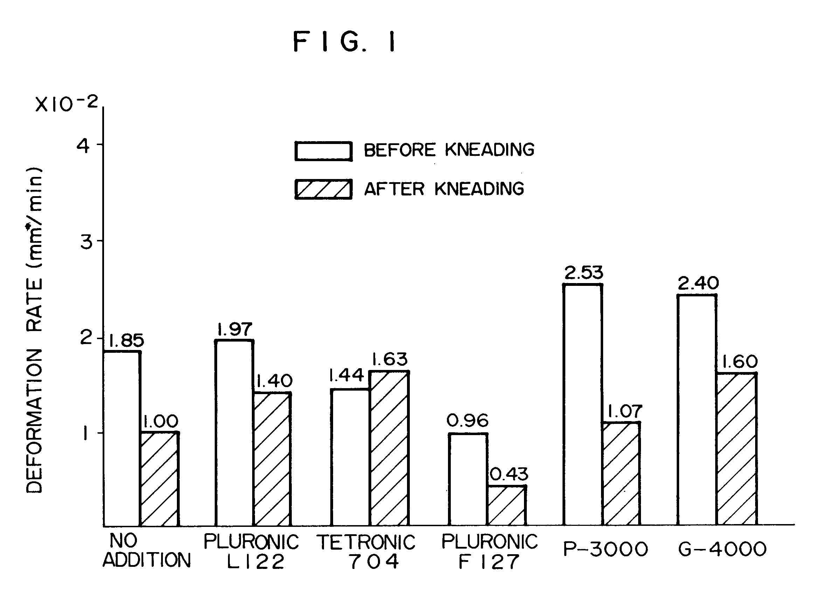

The results are shown in Table 1 and Fig. 1.

As is clear from Table 1, when PLURONIC F127 is added, the stability (in the deformation rate and the dynamic stability) is remarkably improved both before and after kneading.

Further, in the case of PLURONIC L122 and TETRONIC 704, no change is seen in comparison with the case of no addition before kneading, and the stability is considerably poor before kneading in the case of P-3000 and G-4000. But after kneading, the stability is lowered in the case of PLURONIC L122, TETRONIC 704 and G-4000 in comparison with the case of no addition, while in the case of P-3000, no change is seen in comparison with the case of no addition.

Table 1

| | Polymer | | RD (mm/min) | DS (times/mm) |
|---|---|---|---|---|
| Example 1 | PLURONIC L122 | Before kneading | 1.97 x 10-2 | 2.25 x 103 |
| | | After kneading | 1.40 x 10-2 | 3.12 x 103 |
| Example 2 | TETRONIC 704 | Before kneading | 1.44 x 10-2 | 2.93 x 103 |
| | | After kneading | 1.63 x 10-2 | 2.58 x 103 |
| Example 3 | PLUROMC P127 | Before kneading | 9.60 x 10-3 | 4.38 x 103 |
| | | After kneading | 4.27 x 10-3 | 9.84 x 103 |
| Example 4 | P-3000 | Before kneading | 2.53 x 10-2 | 1.66 x 103 |
| | | After kneading | 1.07 x 10-2 | 3.94 x 103 |
| Example 5 | G-4000 | Before kneading | 2.40 x 10-2 | 1.75 x 103 |
| | | After kneading | 1.60 x 10-2 | 2.63 x 103 |
| Comparative Example 1 | No addition | Before kneading | 1.85 x 10-2 | 2.28 x 103 |
| | | After kneading | 1.00 x 10-2 | 4.25 x 103 |

2) Flexural Strength Test

From the samples mentioned above, test pieces of 2.5 cm x 2.5 cm x 2.5 cm were taken out using a diamond cutter to carry out a flexural strength test.

The flexural strength was measured by using an Instron type tensile compressive tester (TOM/500 type universal tensile compressive tester, mfd. by Shinko Tsushinki K.K., capacity 500 kg) and a Harke type low temperature circulating water both (coolant: water) for controlling the temperature:

Conditions:

Load: 500 kg
Cross head moving speed: 50 mm/min
Stroke: 850 mm
Deflection rate in bending: 50 mm/min
Load measuring: electronic detection by a load cell
Displacement measuring: electronic detection by a selsyn motor
Recorder: Liner recorder (2-pen type) type WTR 281
Chart speed: 500 m/min

Low temperature circulating water bath:

temperature, 7°C to -15°C (controlled within ± 0.05°C using a digital thermometer)
pump capacity, 25 l/min

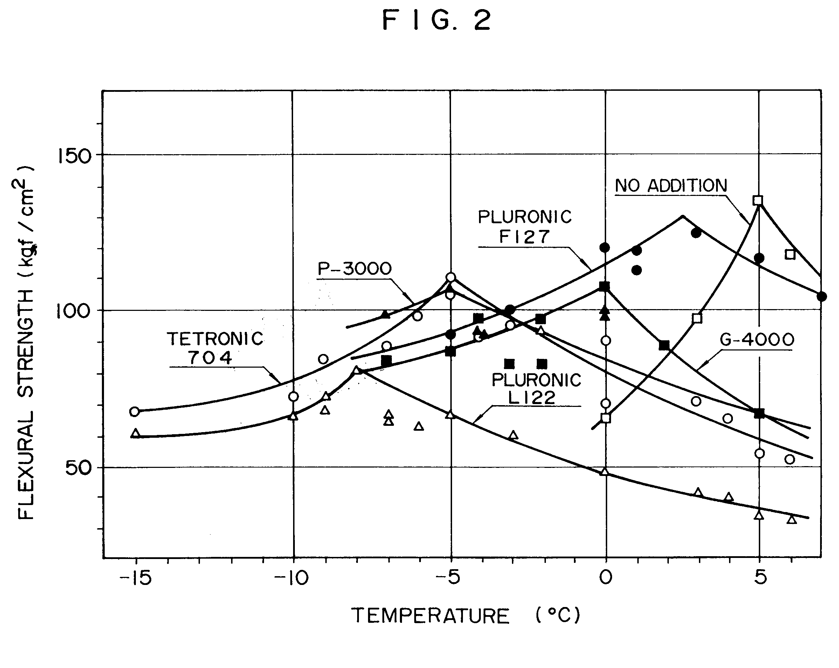

Fig. 2 is a graph taking the temperature along the abscissa axis and the flexural strength along the ordinate axis when the deflection rate in bending is 50 mm/min. Generally speaking, these peaks have a property of regularly moving right and left depending on the deflection rate in bending and the temperature sensitivity of asphalt. Therefore, this test is convenient to know rheological property of asphalt mixtures. The right side of the peak is named as ductile breaking, the left side of the peak is named as brittle breaking and the peak is named as a brittle point. The lower the peak temperature, the lower the brittle temperature. This is preferable for the asphalt mixture. Comparing it the not added material, the brittle point of the composition containing PLURONIC F127 is hardly changed, while that of the composition containing G-4000 is lowered by 5°C, that of the composition containing TETRONIC 704 is lowered by 10°C, that of the composition containing P-3000 is lowered by 10°C, and that of the composition containing PLURONIC L122 is lowered by 13°C. The lowering of the brittle temperatures by the addition of these additives (polymers) can be regarded as remarkable change of the brittle points considering common knowledge in this art previously known.

These test results show that the asphalt composition of the present invention is improved in the stability at high temperatures and in brittleness at low temperatures.

Example 6

| | Parts |
|---|---|
| Straight asphalt (penetration 80°) | 100 |
| PLACCEL H-1P | 10 |
| Crushed stone (2.5 - 13 mm) | 840 |
| Sand (less than 2.5 mm) | 1310 |
| Calcium canbonate | 150 |

The crushed stone, sand and calcium carbonate in amounts mentioned above were placed in a mixer for asphalt and mixed at 156°C. Then, the straight asphalt in an amount mentioned above was added to the mixer and mixed for 3 minutes. Then, PLACCEL H-1P in an amount mentioned above was added to the mixer and mixed for additional 3 minutes. The resulting mixture was placed in a mold at that temperature and solidified by compression under a load of 540 kg using a rollar compactor and traveling the rollar 24 times to give a sample.

The sample was subjected to the wheel tracking test in the same manner as described in Example 1.

Examples 7 and 8, Comparative Example 2

Test pieces were obtained in the same manner as described in Example 6 except for using 10 parts of PLACCEL 220 or PLACCEL 320 in place of 10 parts of PLACCEL H-1P. The test was carried out in the

same manner as described in Example 1.

For compraison, a test piece containing no PLACCEL H-1P was also obtained and tested.

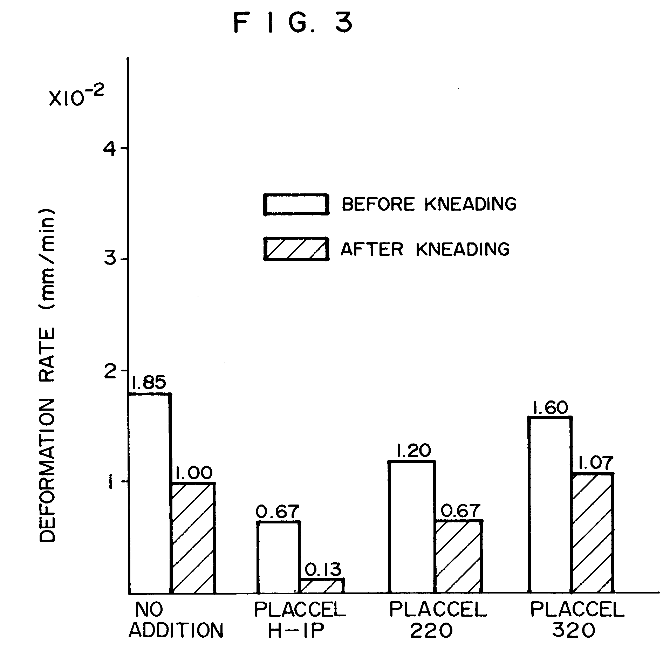

The results are shown in Table 2 and Fig. 3.

Table 2

| | Polymer | | RD (mm/min) | DS (times/mm) |
|---|---|---|---|---|
| Example 6 | PLACCEL H-1P | Before kneading | 6.67 × 10-3 | 6.30 × 103 |
| | | After kneading | 1.33 × 10-3 | 3.15 × 103 |
| Example 7 | PLACCEL 220 | Before kneading | 1.20 × 10-2 | 3.50 × 103 |
| | | After kneading | 6.67 × 10-3 | 6.30 × 103 |
| Example 8 | PLACCEL 320 | Before kneading | 1.60 × 10-2 | 2.63 × 103 |
| | | After kneading | 1.07 × 10-2 | 3.94 × 103 |
| Comparative Example 2 | No addition | Before kneading | 1.85 × 10-2 | 2.28 × 103 |
| | | After kneading | 1.00 × 10-2 | 4.25 × 103 |

As shown in Table 2, the addition of PLACCEL H-1P remarkably improves the stability before kneading. Further, the addition of PLACCEL 220 increases the stability before and after kneading compared with no addition. In the composition containing PLACCEL 320, the stability is hardly changed before and after kneading.

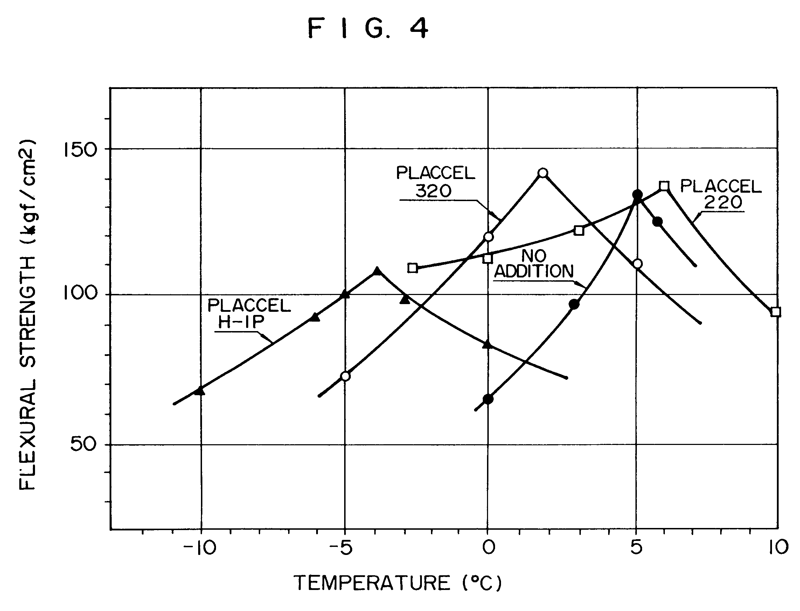

Then, the flexural strength test was carried out in the same manner as described in Example 1. The results are shown in Fig. 4.

Fig. 4 is a graph taking the temperature along the abscissa axis and the flexural strength along the ordinate axis when the deflection rate in bending is 50 mm/min.

Comparing with the brittle point of 5 °C in the case of the not added material, the brittle temperature of the composition containing PLACCEL H-1P is -4 °C and lowered by 9 °C and that of the composition containing PLACCEL 320 is +2 °C and lowered by 3 °C. In the composition containing PLACCEL 220, the brittle temperature is hardly changed. The lowering of the brittle temperatures by the addition of these additives (polymers) can be regarded as remarkable change of the brittle points considering common knowledge in this art previously known.

These test results show that the asphalt composition of the present invention is remarkably improved in low temperature brittleness while maintaining the good stability at high temperature.

As mentioned above, the asphalt composition of the present invention can remarkably lower the brittle temperature while lessening the wheel tracking on surfaces of roads at high temperatures slightly or considerably compared with known asphalt compositions, so that it can be used for paving roads in cold districts.

**Claims**

**1.** An asphalt composition comprising from 1 to 20 parts by weight per 100 parts by weight of asphalt of at least one polyether or at least one polyester or a mixture thereof, wherein the polyester is selected from poly-$\epsilon$-caprolactones,triol form polyesters, poly-$\beta$-propiolactones, polyglycolids, poly(lactic acid)s, $H-[O(CH_2)_5CO]_m-OCH_2CH_2O-[CO(CH_2)_5O]_n-H$ in which n and m are independently integers of from 2 to 1000 or a mixture of such polyesters, and wherein the polyether is selected from (i) ethylene oxide polymers, propylene oxide polymers, adducts of these polymers with amine compounds or (ii) ethylene oxide-propylene oxide copolymers.

**2.** An asphalt composition according to claim 1, comprising a polyether.

**3.** An asphalt composition according to claim 2, wherein the polyether is an ethylene oxide polymer.

**4.** An asphalt composition according to claim 2, wherein the polyether is a propylene oxide polymer.

**5.** An asphalt composition according to claim 2, wherein the polyether is an ethylene oxide-propylene oxide copolymer.

**6.** An asphalt composition according to claim 1, comprising a polyester.

**7.** A process for paving roads comprising applying an asphalt composition according to any one of claims 1 to 6 to the road surface.

**8.** Use of an asphalt composition according to any one of claims 1 to 6 for paving roads.

**Patentansprüche**

**1.** Asphaltmasse, enthaltend pro 100 Gew.-Teile Asphalt 1 bis 20 Gew.-Teile mindestens eines Polyethers oder mindestens eines Polyesters oder eines Gemisches davon, wobei der Polyester aus Poly-$\epsilon$-caprolactonen, Polyestern der Triol-Form, Poly-$\beta$-propiolactonen, Polyglycoliden, Poly(milchsäuren), $H-[O(CH_2)_5CO]_m-OCH_2CH_2O-[CO(CH_2)_5O]_n-H$, wobei n und m unabhängig voneinander ganze Zahlen von 2 bis 1000 sind, oder einem Gemisch solcher Polyester ausgewählt ist und wobei der Polyether aus (i) Ethylenoxidpolymeren, Propylenoxidpolymeren, Addukten dieser Polymeren mit Aminverbindungen oder (ii) Ethylenoxid-Propylenoxid-Copolymeren ausgewählt ist.

**2.** Asphaltmasse nach Anspruch 1, dadurch **gekennzeichnet,** daß sie einen Polyether enthält.

3. Asphaltmasse nach Anspruch 2, dadurch **gekennzeichnet,** daß der Polyether ein Ethylenoxidpolymeres ist.

4. Asphaltmasse nach Anspruch 2, dadurch **gekennzeichnet,** daß der Polyether ein Propylenoxidpolymeres ist.

5. Asphaltmasse nach Anspruch 2, dadurch **gekennzeichnet,** daß der Polyether ein Ethylenoxid-Propylenoxid-Copolymeres ist.

6. Asphaltmasse nach Anspruch 1, dadurch **gekennzeichnet,** daß sie einen Polyester enthält.

7. Verfahren zum Belegen von Straßen, dadurch **gekennzeichnet,** daß man auf die Oberfläche der Straße eine Asphaltmasse nach einem der Ansprüche 1 bis 6 aufbringt.

8. Verwendung einer Asphaltmasse nach einem der Ansprüche 1 bis 6 zum Belegen von Straßen.

**Revendications**

1. Composition d'asphalte, contenant de 1 à 20 parties en poids, pour 100 parties en poids d'asphalte, d'au moins un polyéther, d'au moins un polyester ou d'un mélange de tels polymères, le polyester étant choisi parmi les poly-$\epsilon$-caprolactones, les polyesters-triols, les poly-$\beta$-propiolactones, les polyglycolides, les poly(acide lactique), les composés de formule $H\text{-}[O(CH_2)_5CO]_m\text{-}OCH_2CH_2O\text{-}[CO(CH_2)_5O]_n\text{-}H$ où m et n représentent indépendamment des nombres entiers valant de 2 à 1000, et les mélanges de tels polyesters, et le polyéther étant choisi parmi (i) les polymères d'oxyde d'éthylène, les polymères d'oxyde de propylène et les produits d'addition de ces polymères et de composés aminés, ou (ii) les copolymères d'oxyde de propylène et d'oxyde d'éthylène.

2. Composition d'asphalte, conforme à la revendication 1, qui contient un polyéther.

3. Composition d'asphalte, conforme à la revendication 2, dans laquelle le polyéther est un polymère d'oxyde d'éthylène.

4. Composition d'asphalte, conforme à la revendication 2, dans laquelle le polyéther est un polymère d'oxyde de propylène.

5. Composition d'asphalte, conforme à la revendication 2, dans laquelle le polyéther est un copolymère d'oxyde d'éthylène et d'oxyde de propylène.

6. Composition d'asphalte, conforme à la revendication 1, qui contient un polyester.

7. Procédé de pavage de routes, comportant le fait d'appliquer, sur la surface de la route, une composition d'asphalte conforme à l'une des revendications 1 à 6.

8. Emploi d'une composition d'asphalte conforme à l'une des revendications 1 à 6 pour le pavage de routes.

FIG. 1
BEFORE KNEADING
AFTER KNEADING
DEFORMATION RATE (mm²/min)
X10-2
4
3
2
1
1.85
1.00
1.97
1.40
1.44
1.63
0.96
0.43
2.53
1.07
2.40
1.60
NO ADDITION
PLURONIC L122
TETRONIC 704
PLURONIC F127
P-3000
G-4000

F I G. 2

NO ADDITION
G-4000
PLURONIC F127
PLURONIC L122
P-3000
TETRONIC 704
TEMPERATURE (°C)
FLEXURAL STRENGTH (kgf / cm²)
150
100
50
-15
-10
-5
0
5

FIG. 3
BEFORE KNEADING
AFTER KNEADING
DEFORMATION RATE (mm/min)
X10-2
4
3
2
1
1.85
1.00
0.67
0.13
1.20
0.67
1.60
1.07
NO ADDITION
PLACCEL H-IP
PLACCEL 220
PLACCEL 320

F I G. 4
PLACCEL 220
NO ADDITION
PLACCEL 320
PLACCEL H-IP
150
100
50
-10
-5
0
5
10
TEMPERATURE (°C)
FLEXURAL STRENGTH (kgf/cm2)